# EUROPÄISCHE PATENTSCHRIFT

(11) **EP 1 784 687 B1**
(45) Veröffentlichungstag und Bekanntmachung des Hinweises auf die Patenterteilung: **16.06.2010**
(21) Anmeldenummer: 05775819.5
(22) Anmeldetag: 26.07.2005
(51) Int. Cl.: G03B 21/56, G09F 11/12, G09F 15/00

(54) **WANDELBARE PROJEKTIONSWAND**
VARIABLE PROJECTION SCREEN
UNITE DE PROJECTION TRANSFORMABLE

(30) Priorität: 01.09.2004 DE 102004042233
(43) Veröffentlichungstag der Anmeldung: 16.05.2007
(73) Patentinhaber: Giannis, Dimitrios, 82237 Woerthsee (DE)
(72) Erfinder: Giannis, Dimitrios, 82237 Woerthsee (DE)
(74) Vertreter: Rüger, Barthelt & Abel Patentanwälte
(86) Internationale Anmeldenummer: PCT/EP2005/008086
(87) Internationale Veröffentlichungsnummer: WO 2006/024348

(56) Entgegenhaltungen:
- DE-A1- 1 572 885
- DE-A1- 3 204 967
- DE-A1- 4 421 745
- FR-A- 2 127 292
- US-A- 4 556 283

## Beschreibung

Die vorliegende Erfindung betrifft eine Projektionswand, die für Dia-, Daten- oder Video-Aufprojektion, also zur Vorführung von bewegten oder nichtbewegten Bildern mittels eines Beamers oder beliebigen Projektors geeignet ist, wobei der Betrachter und der Projektor auf gleicher Seite der Projektionswand angeordnet sind.

Hierzu sind unterschiedliche Projektionswände bekannt. Zu einer einfach aufgebauten und kostengünstigen Art gehören sogenannte Rahmenleinwände, die ein Leintuch enthalten, das aus einem undurchsichtigen, Licht reflektierenden Gewebe gefertigt oder mit einer reflektierenden Beschichtung versehen ist. Das Leintuch ist an einem Rahmen starr befestigt, der an einer Wand zu montieren ist. Obwohl Rahmenleinwände stets für Vorführzwecke verfügbar sind, lassen sie sich nicht harmonisch in einem Wohnraum integrieren. Dies insbesondere, wenn das Leintuch eine zweckmäßige Größe hat und wenn das Leintuch zur Erhöhung der Kontrastwahrnehmung schwarz umrandet ist.

Im Allgemeinen werden deshalb aufrollbare Leinwände verwendet, die nach Art eines Rollos auf eine Wickelwelle aufgewickelt und in einem Gehäuse untergebracht sind und die für eine Vorführung aus dem Gehäuse herausgezogen werden. Ausführungsformen, die an der Decke oder an der Wand befestigt werden, ergeben kein ästhetisch ansprechendes Raumbild und eigenen sich kaum für den privaten Gebrauch. Dies gilt auch für in die Decke integrierbare Rolloleinwände, bei denen ferner der Aufwand für die Montage oder Instandsetzung wesentlich erhöht ist. Außerdem kann die erforderliche Planlage und Straffung des ausgefahrenen Leintuches, um eine unangenehm wahrnehmbare Bewegung des Leintuches zu verhindern, nur mittels relativ aufwendiger und kostspieliger Konstruktionen, z.B. über bewegliche Querstreben, sichergestellt werden.

Es haben sich deshalb Rolloleinwände der in der DE 197 07 516 A1 oder AT 335 537 B beschriebenen Art durchgesetzt, die an Rollgestellen, Mehrbeinstativen oder sonstigen Standfüßen hängend befestigt werden und bei Nichtgebrauch weggeräumt werden können. Hierzu wird aber ein geeigneter Stauraum benötigt. Außerdem wird die Montage der Rolloleinwand, einschließlich der Herrichtung eines geeigneten Platzes im Wohnzimmer, Aufstellung des Standfußes, Anbringung des Leinwandgehäuses an dem Standfuß sowie Ausrollung und Straffung des Leintuches, wie auch die Demontage meist als derart lästig empfunden, dass die Leinwand häufig entweder unbenutzt oder fortdauernd im Wohnzimmer aufgestellt bleibt.

Aus der DE 234 98 85 A1 ist eine Aufbewahrungskombinationseinheit bekannt, zu der eine Projektionsleinwand und ein Raumschmuck, z.B. ein Bild, Poster oder Wandteppich, gehören, die miteinander Rücken an Rücken verbunden und an einem Dekorrahmen befestigt sind. Der Rahmen wird manuell gewendet, um die Kombinationseinheit entweder als Leinwand oder als Raumschmuck zu verwenden, der sich harmonisch in die Umgebung einfügt. Nachteilig ist aber, dass die Kombinationseinheit hierzu jedesmal von Hand abgehängt, gewendet und wieder aufgehängt werden muß. Dies ist bei größeren Bilddiagonalen, die häufig zwei Meter übersteigen, nicht nur sehr umständlich, sondern ohne Hilfe einer weiteren Person kaum zu bewerkstelligen.

FR 21 27 292 A beschreibt eine Projektionswand mit einem von einem Rahmen umgebenen Bild und einer nach Art eines Wickelrollos ausgeführten Leinwand. Die reflektierende Projektionsfläche der Leinwand ist mit einem Ende auf einer Wickelwelle befestigt und aufgerollt, die in einem Gehäuse hinter dem Bild gelagert ist. Das andere Ende der Projektionsfläche ragt durch einen in der oberen Rahmenleiste vorgesehenen Schlitz hindurch und kann für die Aufprojektion von Hand von der Wickelwelle abgewickelt, vor dem Bild platziert und an der unteren Rahmenleiste gesichert werden.

DE 32 04 967 A1 beschreibt eine motorisch betreibbare Projektionswand mit einem kastenförmigen Gehäuse, das eine Projektionsöffnung aufweist, durch das wahlweise ein Bild oder eine reflektierende Projektionsfläche von außen sichtbar ist. In einer Ausführungsform ist die Projektionsfläche auf einer hinter einer oberen Rahmenleiste gelagerten Walze befestigt und aufgerollt. Das freie Ende der Projektionsfläche trägt eine horizontale Aussteifungsleiste, an der Schnüre angreifen, die auf zugehörige Rollen aufwickelbar sind. Die Rollen sind auf einer hinter einer unteren Rahmenleiste versteckt angeordneten Welle befestigt, die mit einem Elektromotor antriebsmäßig gekoppelt ist. Somit kann die Projektionsfläche über die Schnüre motorisch von der Walze abgewickelt und vor dem Bild positioniert werden. Ein in der oberen Walze vorgesehener Federmechanismus sorgt dafür, dass sich die Projektionsfläche bei Drehrichtungsumkehr des Elektromotors wieder auf die Walze aufwickelt. In einer anderen Ausführungsform ist das Bildelement auf einer Mittelwand in dem Gehäuse angebracht, während die Projektionsfläche über zwei oberhalb und unterhalb der Mittelwand angeordnete Umlenkwalzen, von denen eine motorisch antreibbar ist, vor oder hinter die Mittelwand gerollt werden kann.

Diese Projektionswände ermöglichen eine schnelle und leichte Umwandlung von einer Leinwand zu einem Bild und umgekehrt. Allerdings kann auch hier die erforderliche Planlage und Straffung des ausgefahrenen Leintuches nicht oder nicht auf Dauer sichergestellt werden, was im Gebrauch die bereits erwähnte unangenehm wahrnehmbare Bewegung des Leintuches zur Folge hat.

Ausgehend hiervon ist es Aufgabe der Erfindung, eine bei Nichtbenutzung verhältnismäßig aufwandsarm harmonisch in einem Wohnraum integrierbare Projektionsleinwand zu schaffen, bei der die erwähnten Nachteile des Standes der Technik, einschließlich der Beeinträchtigungen durch Bewegung des Leintuches, reduziert oder beseitigt sind. Insbesondere soll die Projektionsleinwand bei einfachem Aufbau ein schnelles und leichtes Umwandeln zu einer Leinwand oder einem Raumschmuck und eine einfache Montage, Umrüstung oder Instandsetzung ermöglichen.

Diese Aufgabe wird mit der Projektionswand mit den Merkmalen des Anspruchs 1 gelöst.

Die erfindungsgemäße Projektionswand, wie sie insbesondere für Dia-, Daten- oder Video-Aufprojektion bestimmt ist, weist ein Gehäuse, das einen Innenraum definiert und eine zu dem Innenraum führende Projektionsöffnung aufweist, eine für die Aufprojektion geeignete Leinwand, die aus einem undurchsichtigen Material gefertigt ist und eine lichtreflektierende Projektionsfläche aufweist, sowie ein flächenartiges Bildelement auf, das eine geeignet individuell gestaltete Bildfläche enthält. Entweder die Leinwand oder das Bildelement oder beide ist bzw, sind in dem Innenraum bewegbar angeordnet. Eine antreibbare Transporteinrichtung ist dazu eingerichtet, die Leinwand und/oder das Bildelement wahlweise in unterschiedliche Stellungen in Bezug aufeinander zu überführen. In einer ersten relativen Stellung ist lediglich die Projektionsfläche durch die Projektionsöffnung sichtbar, während die Bildfläche für einen Betrachter von vorne unsichtbar oder verdeckt liegt. Damit ist die Projektionswand für die Aufprojektion mittels eines Beamers, Dia-, Overhead- oder sonstigen Projektors eingerichtet. Bei Nichtgebrauch der Leinwand lässt sich diese und/oder das Bildelement mittels der Transporteinrichtung wahlweise in eine zweite relative Stellung überführen, in der durch die Projektionsöffnung hindurch lediglich die Bildfläche sichtbar ist, während die Projektionsfläche für den Betrachter unsichtbar oder verdeckt liegt. Es entsteht dann ein Wand- oder Raumschmuck, der je nach Gestaltung der Bildfläche harmonisch, ästhetisch oder auf sonstige Weise zu einem Raum passt. Die bewegbare Anordnung der Leinwand und/oder des Bildelementes und die antreibbare Transporteinrichtung ermöglichen eine innerhalb kürzester Zeit und mit Leichtigkeit realisierbare Wandlung zu einem Bild oder zu einer Projektionsleinwand. Ein manuelles Abhängen und Wenden der Projektionswand ist nicht erforderlich.

Erfindungsgemäß sind ferner eine Vorspanneinrichtung, die dazu dient, das bewegte Bildelement oder die bewegte Leinwand in einer gestrafften Anordnung zu halten, und der Vorspanneinrichtung zugeordnete Einstellmittel vorgesehen, mit denen die Stärke der Vorspannkraft der Vorspanneinrichtung eingestellt werden kann. Dies ermöglicht auch eine Nachstellung, wenn die Spannung des Leintuchs oder Bildmaterials nachlässt.

Das Gehäuse kann durch einen rechteckigen Kasten gebildet sein, der zur Vorderseite hin die für den Durchtritt des Lichtstrahls des Projektors vorgesehene Projektionsöffnung aufweist. Die Rückseite kann offen oder geschlossen gestaltet sein, um das Eindringen von Staub, Schmutz- und Fremdkörpern zu verhindern. Das Gehäuse ist aus einem geeigneten Material, bspw. Holz, Stahl, Aluminium oder Kunststoff, ausreichend stabil ausgebildet, um die Bauteile der Projektionswand tragen zu können. Vorteilhafterweise können im Wesentlichen alle relevanten Bauteile in dem von dem Gehäuse umschlossenen Innenraum untergebracht werden. Ansonsten kann das Gehäuse eine beliebige Farbe und Gestaltungsform haben.

Das Gehäuse ist vorzugsweise für die Wandmontage eingerichtet und enthält hierzu dienende Ösen oder Aussparungen, die dann auf einfache Weise auf Haken oder dgl. an der Wand befestigt werden können. Es ist auch möglich, das Gehäuse an Standfüßen oder einem Gestell in einem Raum aufzustellen.

In einer bevorzugten Ausführungsform ist das Gehäuse mehrteilig ausgebildet und enthält wenigstens ein Gehäuseteil, der den Innenraum umgrenzt, sowie einen an der Vorderseite des Gehäuseteils befestigbaren Dekorrahmen, der die zu dem Innenraum führende Projektionsöffnung festlegt. Vorteilhafterweise deckt der Dekorrahmen weitgehend das Gehäuse und die Mechanik, insbesondere die Transporteinrichtung der Projektionswand ab. Die Form, Farbe und das Material für den Dekorrahmen ist individuell, z.B. passend zur Bildfläche, wählbar.

Vorzugsweise ist der Dekorrahmen mittels einfach lösbarer Befestigungsmittel, wie Schrauben, federvorgespannten Bolzen, Scharnieren oder Schnellspannmittel, an dem Gehäuse gehaltert. Er kann bedarfsweise ganz abgenommen oder zumindest geschwenkt werden, um für die Reinigung, Instandhaltung oder Instandsetzung leicht Zugang zu dem Innenraum zu schaffen.

Vorzugsweise sind auch die Leinwand, das Bildelement und die Transporteinrichtung lösbar an dem Gehäuse befestigt und bilden einzelne Module, die bei Verschleiß oder Änderungswünschen unabhängig voneinander ausgetauscht werden können. Durch Verwendung schnell lösbarer Befestigungsmittel lässt sich der jeweilige Modulaustausch rasch und leicht bewerkstelligen, was große Flexibilität bietet.

Die Leinwand enthält ein für die Aufprojektion geeignetes Leintuch, vorzugsweise ein Gewebe- oder Kunststofftuch, das gute Lichtreflexionseigenschaften aufweist. Aus dem Stand der Technik sind unterschiedliche diffus reflektierende Tuchsorten, Tücher, die zur Erhöhung der Leuchtdichte eine spezielle Deckbeschichtung aufweisen, sowie sogenannte retro-reflektive Tücher bekannt, die winzige in der Projektionsfläche imprägnierte Reflexionskörper, z.B. Glaskörner, enthalten, um eine hervorragende Helligkeit bei eingeschränktem Sichtwinkel zu erzielen. Die Sorte und Ausgestaltung des Leintuchs ist je nach Bedarf und Raumbedingungen beliebig wählbar. Eine starre Leinwand kann durch eine geeignete Beschichtung eines Grundträgers, z.B. einer Platte, geschaffen sein.

Ein bewegbares Bildelement kann durch eine Textilienbahn, insbesondere eine Gewebebahn aus Baumwolle, Leinen oder dgl., oder durch eine Folie aus einem relativ hochreißfesten, abriebfesten und dimensionsstabilen Kunststoff, z.B. aus Polyester oder Nylon, oder auch aus Stahl gebildet sein. Die Bildfläche kann ein Bildmotiv oder dgl. enthalten, das aufgemalt, aufgedruckt, z.B. durch Siebdruckverfahren, in Form einer Transferfolie oder auf sonstige Weise aufgebracht ist, um ein flächenhaftes, also im Wesentlichen ebenes Werk zu erhalten. Insbesondere bei einer starren Anordnung des Bildelementes ist die Verwendung eines Ölgemäldes, Aquarells, Posters oder auch einer Mosaik, eines Holzschnittes oder sonstigen Kunstwerks möglich. Bevorzugterweise sind die Abmessungen des Bildelementes, wie auch der Leinwand, größer als die Höhen- und Breitenmasse der durch den Dekorrahmen vorgegebenen Projektionsöffnung, um diese vollständig überdecken zu können.

In einer Ausführungsform der Erfindung ist die Leinwand starr angebracht, während das Bildelement bewegbar gelagert ist. Es können auch empfindliche retro-reflektive Leinwände eingesetzt werden, weil keine Gefahr einer Beschädigung der Reflexionskörper besteht. Die Leinwand kann auf einer stabilen Halterung, einem Halterahmen oder einer planen, verwindungsfreien Platte, aufgespannt sein, um stets eine optimale Planlage und Straffung der Leinwand sicherzustellen. Wenn sie mittels Druckknöpfen befestigt ist, kann sie bedarfsweise schnell von der Halterung abgenommen werden. Sie kann aber auch an der Halterung fixiert, z.B. angetackert oder angeklebt, sein, während die Halterung lösbar an dem Gehäuserahmen montiert ist.

Als Transporteinrichtung für das bewegbare Bildelement kann eine Wickeleinrichtung mit einer drehbar gelagerten Wickelwelle dienen, auf der das Bildelement vollständig aufgerollt oder nach Art eines Rollos von dieser entrollt und in einen ausgezogenen Zustand überführt werden kann, in dem das Bildelement hinter der Projektionsöffnung und vor der Projektionsfläche angeordnet ist, z.B. hängt, und diese verdeckt.

Das bewegbare Bildelement kann aber auch wenigstens stellenweise eine geschlossene Schleife oder einen Schlauch bilden und über im Abstand zueinander drehbar gelagerte Transportwalzen einer Wendeeinrichtung derart aufgezogen sein, um in eine erste Stellung, in der die Bildfläche zwischen der Projektionsöffnung und der starren Projektionsfläche angeordnet ist, sowie in eine zweite Stellung gewendet zu werden, in der die Bildfläche für den Betrachter unsichtbar hinter der Leinwand liegt. Das Bildelement kann also längs eines durch die Transportwalzen festgelegten O-förmigen Bewegungswegs, der um die starre Leinwand herum verläuft, verfahren werden. Die geschlossene Schleife kann bspw. durch einen leicht elastischen Riemen oder dgl. gebildet sein, vorzugsweise zwei Riemen, die in der Nähe der Seitenränder des Bildelementes, hinter dem Dekorrahmen versteckt befestigt und jeweils zu einem Kreis geschlossen sind. In einer besonders bevorzugten Ausführungsform werden Zahnriemen verwendet, die mit an den Transportwalzen passend eingearbeiteten Verzahnungen in Eingriff kommen.

In einer anderen Ausführungsform ist lediglich die Leinwand bewegbar angeordnet ist, weshalb auch ein wertvolles Kunstbild gefahrlos als starres Bildelement verwendet werden kann. Die Halterung für das Bild ist vorzugsweise lösbar an dem Gehäuse zu montieren. Die Leinwand kann entsprechend den vorerwähnten Ausführungsformen auf eine drehbare Wickelwelle einer Wickeleinrichtung oder eine Schleife bildend auf drehbaren Transportwalzen einer Wendeeinrichtung angebracht sein, um in die zwei relativen Endstellungen gebracht zu werden, in denen die Bildfläche entweder freigegeben oder verdeckt ist.

In einer weiteren Ausführungsform der Erfindung sind sowohl die Leinwand als auch das Bildelement bewegbar. Sie können vorteilhafterweise zu einem endlosen Schlauch miteinander verbunden sein, um durch eine Wendeeinrichtung gemeinsam gedreht oder gewendet zu werden. Die Wendeeinrichtung ist bspw. durch wenigstens zwei zueinander parallele und voneinander beabstandete Transportwalzen gebildet, die den Schlauch an seiner Innenseite aufnehmen und führen, um die an der Außenseite des Schlauchs vorgesehene Projektionsfläche oder Bildfläche hinter der Projektionsöffnung sichtbar anzuordnen. Die Leinwand und das Bildelement können miteinander vernäht sein, wobei ein mehrschichtiger Aufbau mit einer äußeren Lage, einer inneren Lage und einer dazwischen angeordneten Stofflage bevorzugt ist, um trotz der Nähte längs des Umfangs eine weitgehend gleichbleibende Schlauchdicke zu erhalten. Dadurch bleiben die auf den Schlauch bei seiner Umlaufbewegung einwirkenden Kräfte nahezu konstant, wodurch die Gefahr einer Auftrennung der Nähte deutlich reduziert wird.

Die erfindungsgemäße Projektionswand weist vorzugsweise Maskierungsmittel, die zur Erhöhung der Kontrastwahrnehmung eine dunkle, matte Farbe aufweisen und die wirksame helle Projektionsfläche umgrenzen. Im einfachsten Fall ist eine fixe Markierung unmittelbar auf der Leinwand aufgemalt, aufgedruckt, aufgenäht oder aufgebracht. In bevorzugten Ausführungsformen sind aber die Maskierungsmittel zur Anpassung der wirksamen Projektionsfläche an unterschiedliche Bildformate, wie das 16:9 Breitbandformat, das gewohnte 4:3 Fernsehformat oder das 1:1 Format für die Overhead- oder Diaprojektion, eingerichtet. Bspw. können einzelne Maskierungsstreifen längs der jeweiligen Kanten des Dekorrahmens verlaufen und quer dazu verschiebbar sein, um unterschiedliche Durchtrittsfenster für den Projektionsstrahl freizulassen. Es können aber auch zwei oder mehrere Maskierungsmittel mit unterschiedlichen Durchtrittsfenstern zu einem Schlauch oder einer Bahn verbunden und über geeignete Wickel-, Transport- und/oder Umlenkwellen derart verfahrbar sein, um die jeweils gewünschte Maskierung in dem sichtbaren Bereich positionieren zu können.

Die Vorspanneinrichtung dient dazu, das bewegte Bildelement oder die bewegte Leinwand in einer gestrafften Anordnung zu halten. Hierzu kann ein im Wesentlichen ebener Führungskörper, z.B. eine Platte, verwendet werden, der die Leinwand und/oder das Bildelement in der Nähe der Projektionsöffnung führt. Als Vorspanneinrichtung kann auch eine drehbar gelagerte Walze dienen, die gegenüber den Transportwalzen der Wendeeinrichtung zurückversetzt liegt. Im Falle einer Wickeleinrichtung ist vorzugsweise eine Arretierung vorzusehen, um das freie Ende der Leinwand bzw. des Bildelementes festzusetzen.

Der Vorspanneinrichtung sind Einstellmittel zugeordnet, um die Stärke der Vorspannkraft einstellen zu können. Dies ermöglicht eine Nachstellung, wenn die Spannung des Leintuchs oder Bildmaterials nachlässt.

Die Transporteinrichtung kann antriebsmäßig mit einer Handhabe verbunden sein, die vorzugsweise aus dem Gehäuse hinausgeführt ist und dazu dient, die Transporteinrichtung manuell anzutreiben. Die Handhabe kann in Form eines Kurbelrads, einer Kurbelstange oder dgl. ausgeführt sein.

In einer bevorzugten Ausführungsform sind aber Antriebsmittel dazu vorgesehen, die Transporteinrichtung motorisch anzutreiben. Verhältnismäßig klein bauende Elektromotoren, die sich durch geringes Gewicht, geringe Lärmentwicklung und sichere Betriebsweise auszeichnen, werden ebenso bevorzugt wie Rohrmotoren, wie sie allgemein bei Markisen oder Rollläden eingesetzt werden. Bei verhältnismäßig geringem Stromverbrauch reichen Akkumulatoren als Energiequelle aus. Die Antriebseinrichtung und Steuereinheit können aber auch gegebenenfalls über einen Transformator durch die gewöhnliche Netzversorgung oder mittels einer Leitungsverbindung indirekt über den Projektor gespeist sein.

Bei einem Motorantrieb ist vorzugsweise eine Betätigungseinrichtung in Form von Tastenfeldern, Steuerhebeln oder dgl. vorzusehen, die einer Person ermöglicht, die Erscheinungsform der Projektionswand schnell zu ändern. Die Projektionswand kann eine Empfangseinheit enthalten, die Signale zum Betrieb der Projektionswand entgegennimmt und an die Steuereinrichtung übermittelt. Kabellose, z.B. auf IR- oder Funksignale ansprechende Empfangseinheiten werden bevorzugt.

Weitere vorteilhafte Einzelheiten der Erfindung ergeben sich aus Unteransprüchen, der Zeichnung sowie der dazugehörigen Beschreibung. In der Zeichnung ist ein Ausführungsbeispiel des Gegenstandes der Erfindung dargestellt. Es zeigen:
Fig. 1 eine erfindungsgemäße Bild- und Projektionswand in einer vereinfachten Perspektivdarstellung;
Fig. 2 die Projektionswand nach Fig. 1 in einer schematisierten Perspektivdarstellung, mit Blick auf die Rückseite und in anderem Maßstab;
Fig. 3 eine erste Ausführungsform der Projektionswand nach Fig. 1 und 2 unter Veranschaulichung der Leinwand, des Bildelementes und der Transporteinrichtung, in einer schematisierten Perspektivdarstellung;
Fig. 4a und 4b Seitenansichten der Ausführungsform nach Fig. 3 mit unterschiedlichen Stellungen der wickelbaren Leinwand (bezw. des wickelbaren Bildelementes), in einer stark schematisierten Darstellung;
Fig. 5 eine weitere Ausführungsform der erfindungsgemäßen Projektionswand in einer der Fig. 3 ähnlichen Darstellung;
Fig. 6 eine Seitenansicht der Ausführungsform nach Fig. 5 unter Veranschaulichung einer einstellbaren Vorspanneinrichtung, in einer stark schematisierten Darstellung;
Fig. 7a und 7b vereinfachte Darstellungen einer Kupplungseinrichtung zur Drehmitnahme der Leinwand und/oder des Bildelementes, in einer stark vereinfachten Darstellung;
Fig. 8 einen Ausschnitt einer mit dem Bildelement zu einem Schlauch verbundenen Leinwand, in einer vereinfachten Perspektivdarstellung;
Fig. 9 verstellbare Maskierungsmittel zur anpassbaren Maskierung der wirksamen Projektionsfläche, in einer schematisierten Draufsicht;
Fig. 10a und 10b eine modifizierte Ausführungsform von anpassbaren Maskierungsmitteln in einer vereinfachten Draufsicht von oben und von vorne; und
Fig. 11 eine weitere Ausführungsform einer erfindungsgemäßen Bild- und Projektionswand, in einer stark schematisierten Perspektivdarstellung.

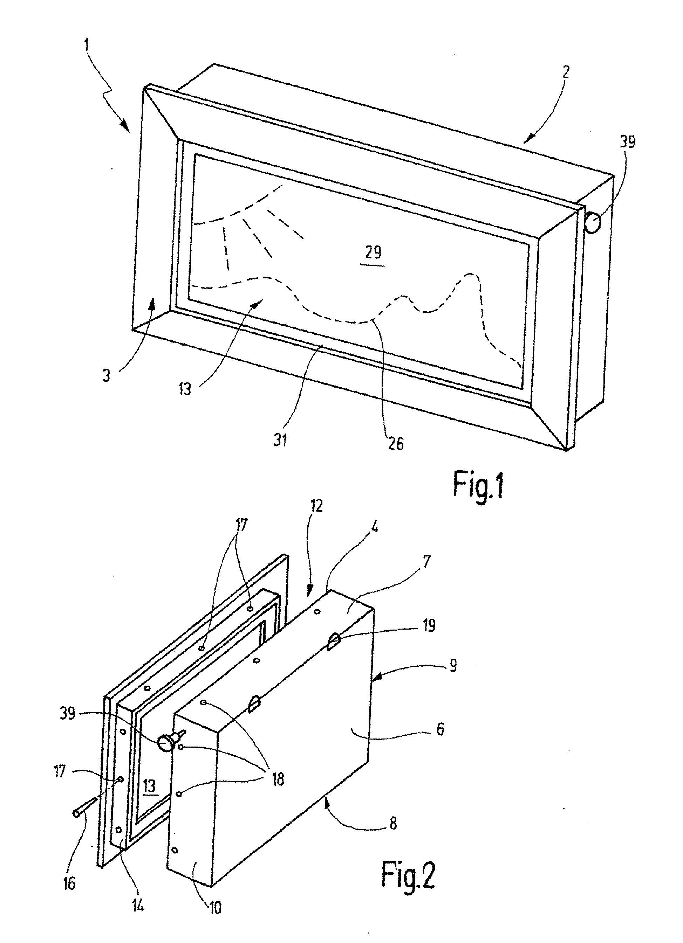

Fig. 1 und 2 zeigen auf schematisierte Perspektivansichten einer kombinierten Bild- und Projektionsleinwand 1 gemäß der Erfindung, kurz Projektionswand genannt, die als Raumschmuck wie auch als Projektionsleinwand dienen kann, um mittels eines Beamers oder sonstigen Projektors bewegte oder unbewegte Bilder auf die Leinwand projizieren zu können. Die Projektionswand 1 weist ein kastenartiges Gehäuse 2, das aus einem stabilen Material, wie Holz, Stahl, Aluminium oder Kunststoff, hergestellt ist, sowie einen Dekorrahmen 3 auf, der auf der dem Betrachter und Projektor zugewandten Seite vorzugsweise derart an dem Gehäuse 2 montiert ist, dass er in einer Draufsicht von vorne dieses vollständig verdeckt.

Der Gehäusekasten 2 weist eine offene Vorderseite 4, eine durch eine rechteckige Rückwand geschlossene Rückseite 6 sowie vier seitliche rechteckige Gehäusewände auf, von denen die im angebrachten Zustand obere und untere mit 7 bzw. 8 bezeichnet ist, während die hierzu senkrechten und vertikal angeordneten Seitenwände das Bezugszeichen 9 bzw. 10 tragen. Die Wände 6 bis 10 legen einen quaderförmigen Innenraum 12 des Gehäuses 2 fest, in dem vorzugsweise nahezu alle Komponenten der Projektionswand 1 untergebracht werden können.

Der Dekorrahmen 2 ist hier einem gewöhnlichen Bildrahmen nachgebildet, kann jedoch hinsichtlich seiner Form, Farbe und seines Materials beliebig gestaltet sein. Jedenfalls umgibt der Dekorrahmen eine zu dem Innenraum 12 führende Projektionsöffnung 13, durch die das Licht eines Projektors hindurchtreten kann. Der Dekorrahmen 3 ist vorzugsweise lösbar an dem Gehäuse 2 montiert, wozu gemäß Fig. 2 auf der Rückseite des Dekorrahmens 3 ein Verbindungsrahmen 14 befestigt ist. Der rechteckige Verbindungsrahmen 14 verläuft im Wesentlichen parallel zu den Seitenwänden 6 bis 10 und hat etwas kleinere Abmessungen, so dass er mit geringem Spiel in das Gehäuse 2 eingeschoben werden kann, bis der Dekorrahmen an der Vorderseite 4 zu liegen kommt. Dann kann der Verbindungsrahmen 14 an den Seitenwänden 6 bis 10 mittels Stiften, Schraubenbolzen oder dgl. fixiert werden, von denen in Fig. 2 lediglich einer veranschaulicht und mit 16 bezeichnet ist. Die Stifte 16 werden in Löcher 17 bzw. 18 eingeführt, die in dem Gehäuse 2 und dem Verbindungsrahmen 14 fluchtend eingerichtet sind. Die so zusammengebaute Projektionswand 1 wird mittels an der Rückwand vorgesehener Aufhängemittel 19, im einfachsten Fall Ösen oder Aussparungen, an einer Wand befestigt. Sie kann aber auch in einem Raum an einem Gestell oder dgl. aufgestellt werden.

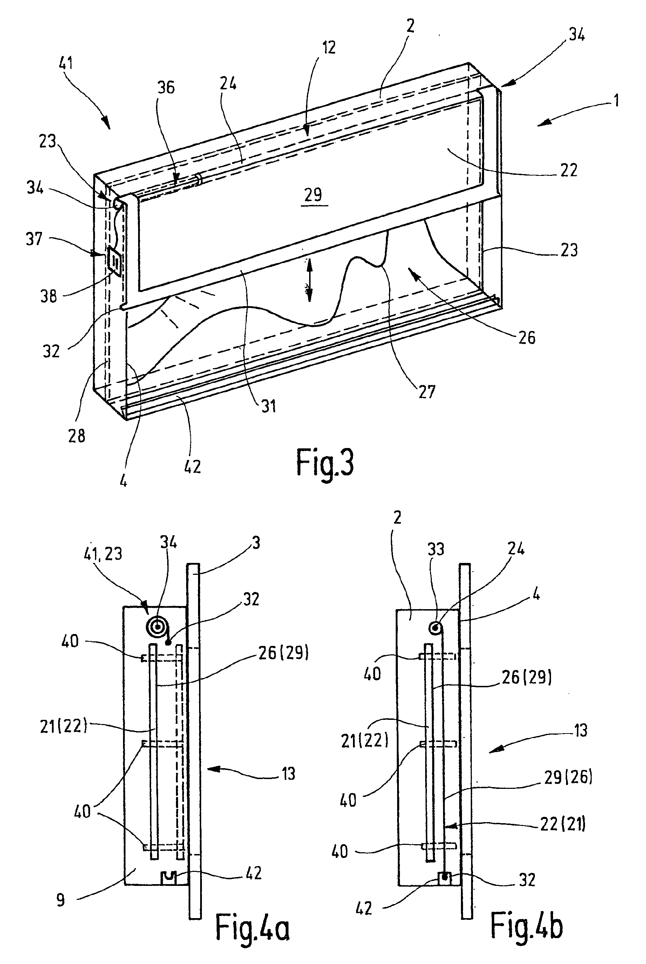

Die Projektionswand 1 lässt sich bedarfsgemäß zu einem Bild oder zu einer Projektionsleinwand verwandeln. Eine erste Realisierungsform hierfür ist auf schematisierte Weise in den Fig. 3, 4a und 4b veranschaulicht, wobei aus Übersichtlichkeitsgründen der Dekorrahmen 3 in Fig. 3 sowie weitere Details weggelassen sind. Wie zu sehen, enthält die Projektionswand 1 ein hier an dem Gehäuse 2 ortsfest befestigtes Bildelement 21, eine Leinwand 22 sowie eine Wickeleinrichtung 23, die dazu dient, die Leinwand 22 nach Art eines Rollos auf eine Wickelwelle 24 aufzurollen bzw. daraus zu entrollen.

Das Bildelement 21 kann ein beliebiges flächenartiges, also in einer Ebene ausgedehntes Werk sein, insbesondere ein den Raum zu schmückendes Kunstwerk, wie ein Ölgemälde, Aquarellbild, eine Zeichnung, ein Poster, Wandzierteppich etc. Jedenfalls enthält es eine Bildfläche 26, die auf eine geeignete Weise gestaltet ist und bspw. ein Bildmotiv 27 enthält. Die Bildfläche 26 ist über einem Spannrahmen 28 gespannt und an diesem angeklebt, angeheftet oder auf sonstige Weise befestigt. Der Spannrahmen 28 selbst ist in dem Innenraum 12 bspw. durch eine Schraub- oder Klemmverbindung an dem Gehäuse 2 derart festgesetzt, dass die Bildfläche 26 im Abstand und parallel zu der Stirnfläche 4 und der Projektionsöffnung 13 ausgerichtet ist. Lösbare Befestigungsmittel werden bevorzugt, um das Bildelement 21 bedarfsweise austauschen zu können.

Die Leinwand 22 ist aus einem geeigneten Leintuch, bspw. einem Gewebe aus Baumwolle, Leinen oder dgl. gefertigt und entweder von sich aus relativ undurchsichtig oder auf der Rückseite mit einer dunklen Beschichtung versehen. Die Vorderseite der Leinwand, die die Projektionsfläche 29 bildet, ist hell und stark lichtreflektierend, wozu auch eine geeignete Deckbeschichtung aufgetragen sein kann. Bei dem in Fig. 3 veranschaulichten Beispiel ist die wirksame Projektionsfläche 29 von einer rechteckigen Maskierung 31 umgrenzt, die eine dunkle, matte Farbe aufweist und entweder unmittelbar auf die Leinwand 22 aufgetragen oder in Form von Stoffstreifen, z.B. schwarzen Samtstreifen, gebildet ist, die längs der Ränder der Projektionsfläche 29 aufgenäht, aufgeklebt oder auf sonstige Weise befestigt sind. Es ist bekannt, dass derartige dunkle Maskierungen die Kontrastwirkung für einen Betrachter erhöhen.

Wie aus der Zeichnung ersichtlich, ist die freie, untere waagrechte Kante der Leinwand 22 mit einer Metallleiste 32 versehen, die die Leinwand 22 beschwert und strafft, während die hierzu parallele obere Kante 33 an einer Wickelwelle 24 der Wickeleinrichtung 23 befestigt ist.

Die Wickelwelle 24 ist hier durch eine Hohlwelle gebildet, die mittels Wälzlager 34, bspw. Kugellager, an den Seitenwänden 9 und 10 des Gehäuses 2 drehbar befestigt ist. Geeignete Gegenlager oder Befestigungen, die eine einfache Montage und Demontage des aus der Wickelwelle 34, der Leinwand 22 und den Wälzlagern 34 gebildeten Moduls ermöglichen, sind in der Zeichnung weggelassen. In dem Innenraum der Wickelwelle ist in Form eines allgemein bekannten Rohrmotors eine Antriebseinrichtung 36 der Wickeleinrichtung 23 angeordnet, die dazu dient, die Wickelwelle 24 in eine beliebige Richtung in Drehbewegung zu versetzen.

Die Antriebseinrichtung 36 ist über elektrische Kabel an eine Steuereinrichtung 37, z.B. eine Steuerschaltung, angeschlossen, die mit einer aus dem Gehäuse 2 nach außen hinausgeführten Betätigungseinrichtung 38 verbunden ist, die hier durch Druck- oder Kippschalter gebildet ist. Die Steuereinrichtung 37 wertet Betätigungen der Schalter 38 durch eine Person aus und generiert Steuersignale für die Antriebseinrichtung 36, um die Wickelwelle 24 zu drehen.

Selbstverständlich können außer Rohrmotoren auch Elektromotoren oder andere Antriebe verwendet werden, die gegebenenfalls mit einem untersetzenden Getriebe auszustatten sind. Zur Betätigung können auch Steuerhebel, Tastenfelder oder sonstige geeignete Betätigungsmittel dienen. Es ist auch möglich, die Antriebseinrichtung 36 über ein Kabel mit einem Signalausgang des verwendeten Projektors derart zu koppeln, dass die Projektionswand 1 beim Ein- bzw. Ausschalten des Projektors automatisch in den erforderlichen Zustand überführt wird. Ferner kann eine optische oder elektromagnetische Empfangseinheit integriert werden, die geeignet ist, um von einer Fernbedienung herrührende IR-Signale, Funkwellen oder dgl. zu empfangen und an die Steuereinrichtung zur Auswertung zu übermitteln.

Umgekehrt kann auf eine Antriebsmaschine und Steuerung verzichtet werden und eine manuelle Antriebseinrichtung vorgesehen sein. Diese kann, wie in Fig. 1 und 2 veranschaulicht, in Form eines mit der Wickelwelle 24 gekoppelten, an dem Gehäuse 2 außen angebrachten Drehrads 39 ausgebildet sein, das zur Erleichterung der Handhabung teleskopartig ineinander bzw. auseinander schiebbar sein kann und von Hand gedreht wird, um die Wickelwelle zu drehen. Statt des Drehrads 39 kann auch eine mit einem Knickgelenk ausgestattete Kurbelstange, ein Riemenantrieb oder dgl. vorgesehen sein.

Die insoweit beschriebene Projektionswand 1 funktioniert wie folgt:
Die Projektionswand 1 ist an einer geeigneten Stelle in einem Raum aufgestellt oder an einer Wand aufgehängt und dient bei Nichtgebrauch als Raumschmuck. Wie aus Fig. 4a ersichtlich ist die Leinwand 22 vollständig auf der Wickelwelle 24 aufgewickelt und gemeinsam mit der Wickelwelle 24 für einen im Abstand vor der Projektionswand 1 befindlichen Betrachter unsichtbar in dem durch den Dekorrahmen 3 verdeckten oberen Bereich des Innenraums 12 angeordnet. Die Drehachse der Wickelwelle 24 kann wie in Fig. 4a in der Ebene des Bildelementes 21 liegen oder entsprechend Fig. 3 geringfügig in Richtung der Projektionsöffnung 13 vorverlegt sein. Jedenfalls ist durch die Projektionsöffnung 13 dann im Wesentlichen nur die Bildfläche 26 des Bildelementes 21 mit dem Bildmotiv 27 sichtbar, wie in Fig. 1 mit gestrichelter Linie angedeutet.

Soll die Projektionswand 1 für Vorführzwecke benutzt werden, wird die durch die Wickelwelle 24 und die gesteuerte Antriebseinrichtung 36 bis 38 bzw. das Drehrad 39 gebildete Transporteinrichtung 41 betätigt, um die Projektionswand 1 von dem in Fig. 4a veranschaulichten Zustand in den in Fig. 4b veranschaulichten Zustand zu überführen, in dem die Leinwand 22 von der Wickelwelle 24 entrollt oder ausgezogen ist und in einer zu dem Bildelement 21 und der Projektionsöffnung 13 parallelen, senkrechten Lage zwischen diesen hängt. Hierzu wird die Wickelwelle 24 geeignet gedreht, um die Leinwand 22 herabzulassen. Es können hier nicht dargestellte Führungsmittel, z.B. Führungsschienen, vorgesehen sein, um die Metallleiste 32 und somit die Leinwand 22 bei ihrer Bewegung nach unten zu führen. Bei der Bewegung verdeckt die Leinwand 22 die Bildfläche 26 zunehmend (vgl. Fig. 3), bis ihr unterer Rand, hier die Metallleiste 32 in die Nähe der unteren Gehäusewand 8 gelangt und eine dort befindliche Arretierungsvorrichtung 42 erreicht. Die Arretierungsvorrichtung 42 ist hier durch eine Schiene gebildet, die Magnete, evtl. Elektromagnete enthält und die die Metallleiste 32 aufnimmt und festhält.

Vorzugsweise ist auch eine hier nicht näher veranschaulichte Erfassungsvorrichtung in Form eines mechanisch oder berührungslos arbeitenden Sensors, z.B eine Lichtschranke, derart angeordnet, um erfassen können, wenn die Leinwand 22 die Endlage erreicht, bspw. die Metallleiste 32 in die Arretierung 42 eintaucht. Die Steuerung 37 kann daraufhin eine leichte Bewegungsumkehr der Wickelwelle 24 bewirken und die Antriebseinrichtung 36 anhalten, um die Leinwand 22 in einer planen, gestrafften Lage zu halten. Die Leinwand 22 könnte auch unter manueller Straffung in Einhängemittel, z.B. Haken, eingehängt werden. Jedenfalls ist in dem in Fig. 1 und 4b veranschaulichten Endzustand das Bildelement 21 durch die Leinwand 22 verdeckt, so dass durch die Projektionsöffnung 13 lediglich die Projektionsfläche 29 sichtbar ist.

Wird die Projektionswand 1 nicht mehr für eine Vorführung gebraucht, wird sie auf einfache Weise wieder zurück in ein Bild umgewandelt, indem die Wickelwelle 24 in eine Richtung gedreht wird, um die Leinwand hochzuziehen und auf diese aufzuwickeln. Das Erreichen der oberen Endlage gemäß Fig. 4a kann wiederum durch einen Sensor erfasst werden.

Wie erwähnt, kann die Verwandlung der sich harmonisch in die Umgebung einfügenden Bildwand zu einer Projektionsleinwand und umgekehrt mittels der Betätigungseinrichtung 38 oder über eine Fernbedienung gesteuert und voll automatisiert ablaufen oder auch manuell vorgenommen werden. Durch die Transporteinrichtung 41 ist dies jederzeit schnell und einfach durchführbar. Probleme und Unannehmlichkeiten, wie sie mit der Montage, Demontage und Verstauung von herkömmlichen Rolloleinwänden verbunden sind, sind beseitigt. Das Bildelement 21, der Dekorrahmen 3 und die Leinwand 22 sind entsprechend den individuellen Wünschen beliebig wählbar und als einzelne Module schnell und problemlos austauschbar. Dadurch ist große Flexibilität hinsichtlich der Gestaltung, des Einsatzes und der Bedienbarkeit der erfindungsgemäßen Projektionswand 1 gegeben.

Die Erfindung läßt zahlreiche weitere Modifikationen zu. Während die Ausführungsform nach Fig. 1 bis 4 besonders dafür geeignet ist, auch sehr hochwertige Bildelemente 21, wie Ölgemälde zu verwenden, weil diese ortsfest angebracht sind, kann die Anordnung auch vertauscht werden. In diesem Fall wird also eine an einem Rahmen festgespannte, vorzugsweise z.B. durch Druckknöpfe oder ähnlich lösbar an diesem befestigte Leinwand verwendet, die dann ortsfest an dem Gehäuse 2 angebracht ist, während das Bildelement 21 in Form bspw. einer Gewebebahn auf die Wickelwelle 24 aufgewickelt wird. Das Bildelement 21 kann also wahlweise in die aufgewickelte Stellung gemäß Fig. 4a, um vollständig hinter dem Dekorrahmen 3 zu verschwinden und die Projektionsfläche 29 freizugeben, oder in die ausgezogene Stellung gemäß Fig. 4b überführt werden, in der es die Leinwand 22 zum Betrachter hin abdeckt und lediglich das Bildmotiv 27 durch die Projektionsöffnung 13 sichtbar ist. Es gilt im Wesentlichen die obige Beschreibung, wenn die Elemente 22 und 21 gegeneinander ausgetauscht werden, wie in Fig. 4a und 4b durch die in Klammern beigefügten Bezugszeichen angedeutet.

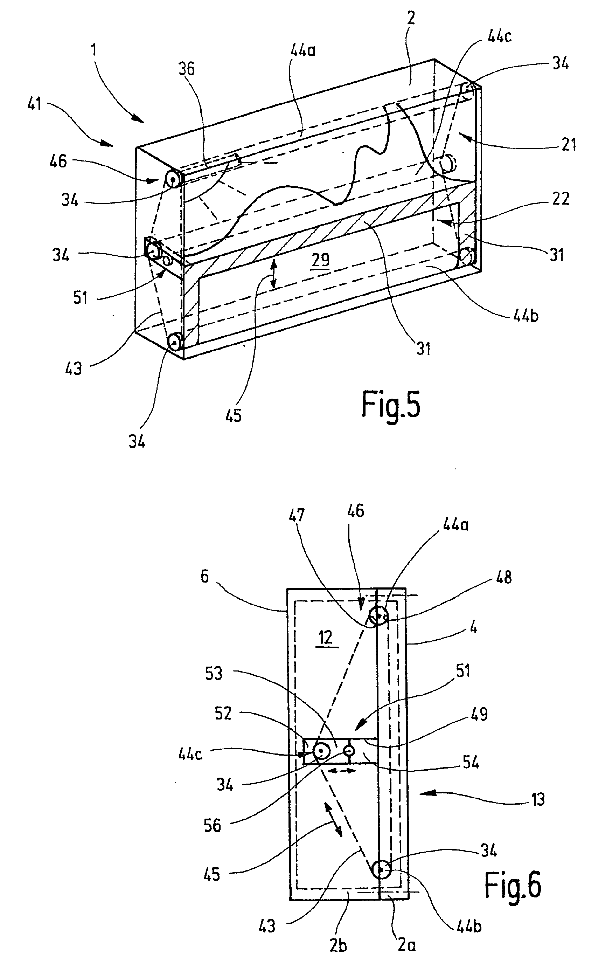

Weitere Modifikationen der Erfindung sind in den Fign. 5 bis 11 veranschaulicht. Soweit Übereinstimmung in Bau und/oder Funktion besteht, wird unter Verwendung gleicher Bezugszeichen auf die vorstehende Beschreibung verwiesen, wobei einzelne Details, wie der Dekorrahmen, Steuerungs- und Betätigungsmittel, aus Übersichtlichkeitsgründen zum Teil weggelassen sind.

Die in Fig. 5 veranschaulichte Ausführungsform unterscheidet sich von derjenigen nach Fig. 1 bis 4 insbesondere dadurch, dass hier sowohl das Bildelement 21 als auch die Leinwand 22 bewegbar angeordnet sind, wozu auch die Transporteinrichtung 41 angepasst ist. Die Leinwand 22 und das Bildelement 21 sind durch bahnförmige, rechteckige Zuschnitte gebildet, die aus einem Stoff, einer Folie oder dgl. gebildet sein können. Sie sind an ihren Längskanten miteinander vernäht oder verklebt, um einen in Umfangs- oder Bewegungsrichtung 45 endlosen Schlauch 43 zu bilden. Der Schlauch 43 ist über wenigstens zwei, im dargestellten Fall drei Transportwalzen 44 einer als Wendeeinrichtung 46 ausgebildeten Transporteinrichtung 41 derart aufgezogen, dass die Projektionsfläche 29 und die Bildfläche 26 nach außen weisen. Eine motorangetriebene Transportwalze 44a ist in dem oberen Bereich und eine untere Transportwalze 44b an dem unteren Ende der Seitenwände 9 und 10 mittels Wälzlager 34 drehbar gelagert. Eine dritte Transportwalze 44c ist in vertikaler Richtung in etwa in der Mitte zwischen den Walzen 44a und 44b, parallel zu diesen und gegenüber diesen in Richtung auf die Rückwand 6 zurückversetzt an dem Gehäuse 2 drehbar gelagert. Der Schlauch 43 weist im aufgespannten Zustand in Seitenansicht die Form eines gleichschenkligen Dreiecks auf, an dessen Ecken die Transportwalzen 44 angeordnet sind. Die durch die Transportwalzen 44a, 44b vorgegebene Grundfläche verläuft parallel zu der Stirnseite 4 und in geringem Abstand zu der Projektionsöffnung 13.

Wie insbesondere aus Fig. 6 hervorgeht, ist das Gehäuse 2 hier zweiteilig, mit einem vorderen Gehäuseteil 2a und einem hinteren Gehäuseteil 2b ausgebildet, die bspw. durch Schraubmittel, Klammern oder dgl. miteinander schnell lösbar verbunden sind. Die Gehäuseteile 2a und 2b weisen an den miteinander zu verbindenden Flächen halbkreisförmige Aussparungen 47, 48 auf, die gemeinsam kreisrunde Öffnungen ergeben, in denen die Wälzlager 34 aufgenommen und festgesetzt werden. Zur Aufnahme der Wälzlager 34 der dritten Transportwalze 44c ist in dem Gehäuseteil 2b ein in Seitenansicht rechteckiger, zu dem Gehäuse 2a hin offener Ausschnitt 49 ausgebildet.

In dem Ausschnitt 49 ist ferner eine einstellbare Vorspanneinrichtung 51 angeordnet, die durch Vorspannen der Transportwalze 44c den Schlauch 43 in einer straffen Anordnung hält. Vorteilhafterweise ist die Vorspanneinrichtung 51 von der Außenseite des Gehäuses 2 zugängig. Zu der Vorspanneinrichtung 51 gehören im vorliegenden Fall drei in dem Ausschnitt 49 verschiebbar gelagerte Elemente 52, 53 und 54. Ein erstes Element 52 ist am Grund des Ausschnitts 49 angeordnet und aus einem etwas flexiblen Material gebildet, das sich in Richtung der Rückwand 6 geringfügig zusammendrücken lässt. Das Wälzlager 34 der Transportwalze 44c ist zwischen dem elastischen Element 52 und einem mittleren Element 53 der Vorspanneinrichtung 51 aufgenommen, die hierzu geeignete Flächen oder Haltemittel aufweisen. Ein in Fig. 6 rechtes Element 54 ist zwischen dem mittleren Element 53 und dem Gehäuseteil 2a angeordnet. Eine Einstellschraube 56 mit einem konischen Schraubenbolzen sitzt in einer Gewindebohrung, die in der Trennebene zwischen den Elementen 52 und 53 horizontal eingerichtet ist.

Die Gesamtlänge der Elemente 52 bis 54 der Vorspanneinrichtung 51 entspricht im Wesentlichen der Tiefe des Ausschnitts 49, und die Umfangslänge des Schlauchs 43 ist derart gewählt, dass dieser im montierten Zustand weitgehend straff gehalten ist. Lässt die Spannung infolge Benutzung nach oder ist ansonsten ein Nachstellen erwünscht, wird die Einstellschraube 56 weiter eingeschraubt, wodurch die Elemente 53 und 54 auseinander geschoben werden und das Wälzlager 34 in Richtung der Rückwand 6 gegen das flexible Element 52 gedrückt und verschoben wird, das sich geringfügig elastisch verformt. Vorzugsweise ist eine einstellbare Vorspanneinrichtung 51, die auch anders ausgeführt sein kann, an beiden Lagerstellen der Transportwalze 44c oder einer beliebigen der Transportwalzen 44 vorgesehen, um die Vorspannkraft vorzugeben und auch Ausrichtungsfehler zwischen den Walzen 44 auszugleichen. Dadurch wird eine über die gesamte Länge der Walzen 44 hinweg gleichmäßige linien- oder flächenhafte Berührung mit der Innenseite des Schlauchs 43 erzielt.

Im Einsatz wird die Transportwalze 44a durch die Antriebseinrichtung 36 oder von Hand in Drehung versetzt, um den Schlauch 43 um die Walzen 44 herum in Umfangsrichtung 45 zu transportieren oder zu wenden, so dass einmal nur der Leinwandabschnitt 22 mit der Maskierung 31 an der Vorderseite 4 angeordnet und durch die Projektionsöffnung 13 einsehbar ist und dann wiederum, wenn der Schlauch 34 um seine halbe Umfangslänge weitergedreht worden ist, nur der Bildflächenabschnitt 26 durch die Projektionsöffnung 13 zu sehen ist, während die Projektionsfläche 29 zu der Rückseite 6 weist. Die Transportweite kann durch einen Schrittmotor vorgegeben oder durch den Benutzer gesteuert sein. Es können auch Markierungen an dem Schlauch 43 gemeinsam mit einer optischen, magnetischen oder sonstigen Erfassungsvorrichtung vorgesehen werden, um bei Erreichen einer der zwei relativen Endlagen ein Signal zu erzeugen, aufgrund dessen die Steuereinrichtung 37 die Antriebseinrichtung 36 anhält. Jedenfalls kann mit Hilfe der Wendeeinrichtung 46 die Projektionswand 1 schnell und einfach in eine Projektionsleinwand oder in ein ästhetisches Bild gewandelt werden. Zur Führung des Schlauchs 43 können die Transportwalzen 44 in ihrem mittleren Abschnitt einen verminderten Durchmesser haben, oder es können auch gesonderte Führungsmittel an dem Gehäuse 2 angebracht sein.

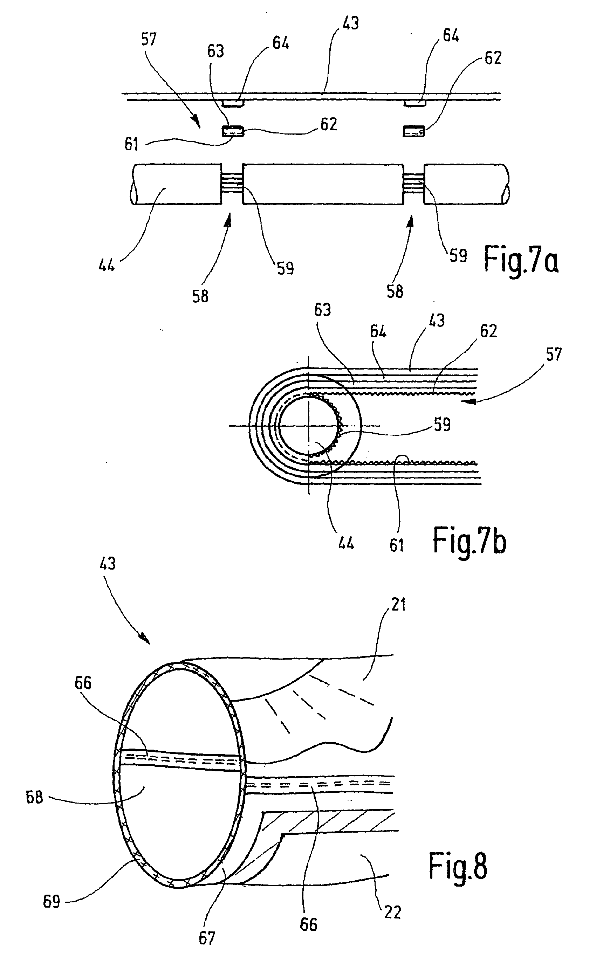

In den Fign. 7a bis 7c ist eine Kupplungseinrichtung 57 veranschaulicht, die die Drehmitnahme zwischen einer Transportwalze 44 und dem Schlauch 43 verbessert und hier als Zahnriemenkupplung ausgebildet ist. Hierzu sind an zwei oder mehreren Stellen längs der Walzen 44a bis 44c ringförmige Ausnehmungen 58 ausgebildet, die Stirnverzahnungen 59 tragen, die passend zu Zähnen 61 von Zahnriemen 62 gestaltet sind, mit denen sie im Betrieb kämmen. Die Zahnriemen 62 werden um die Transportwalzen 44 herum derart gelegt, dass sie in die Ausnehmungen 58 einfinden. An der Außenseite der Zahnriemen 62 ist hier jeweils ein Klettband 63 befestigt, bspw. aufgeklebt, dem gegenüberliegend an der Innenseite des Schlauchs 43 jeweils ein Klettband 64 aufgenäht oder aufgeklebt ist. Der Schlauch 43 kann somit schnell an den Zahnriemen 62 und der Walze 44 befestigt oder von diesen gelöst werden. Der Zahnriemen 62 und die Klettbänder 63 und 64 haben gemeinsam eine Höhe, die der Tiefe der Ausnehmung 58 entspricht, um keine Unebenheiten auf der Oberfläche des Schlauchs 43 zu erzeugen. Der Schlauch 43 liegt mit seiner Innenseite flächig auf den Walzen 44 auf. Vorteilhafterweise stellt die Kupplungseinrichtung 57 auch die Führung des Schlauchs 43 bei seiner Umlaufbewegung sicher und verhindert, dass dieser seitlich ausweicht.

Eine vorteilhafte Ausbildung des Schlauchs 43 ist in Fig. 8 veranschaulicht. Der Schlauch 43 ist hier aus mehreren Lagen gefertigt, um Verdickungen, wie sie durch längs des Schlauchs 43 verlaufende Nähte 66 normalerweise entstehen, zu vermeiden und eine gleichmäßige Schlauchdicke zu erhalten. Der Schlauch 43 weist eine äußere Lage 67, die durch die Tücher des Bildelementes 21 und der Leinwand 22 gebildet ist, eine mit der äußeren Lage 67 vernähte innere Lage 68 sowie eine Zwischenlage 69 aus einem Gewebe- oder Schaumstoff auf, die in radialer Richtung zwischen der äußeren und der inneren Lage 67, 68 und in Umfangsrichtung jeweils zwischen den Nähten 66 eingefügt ist. Die Stärke der Zwischenlage 69 entspricht der Nahtdicke. Auf diese Weise kann eine übermäßige Zerrung des Schlauchs 43, wenn eine Naht 66 eine Walze 44 passiert, und somit ein Reißen des Schlauchs 43 verhindert werden.

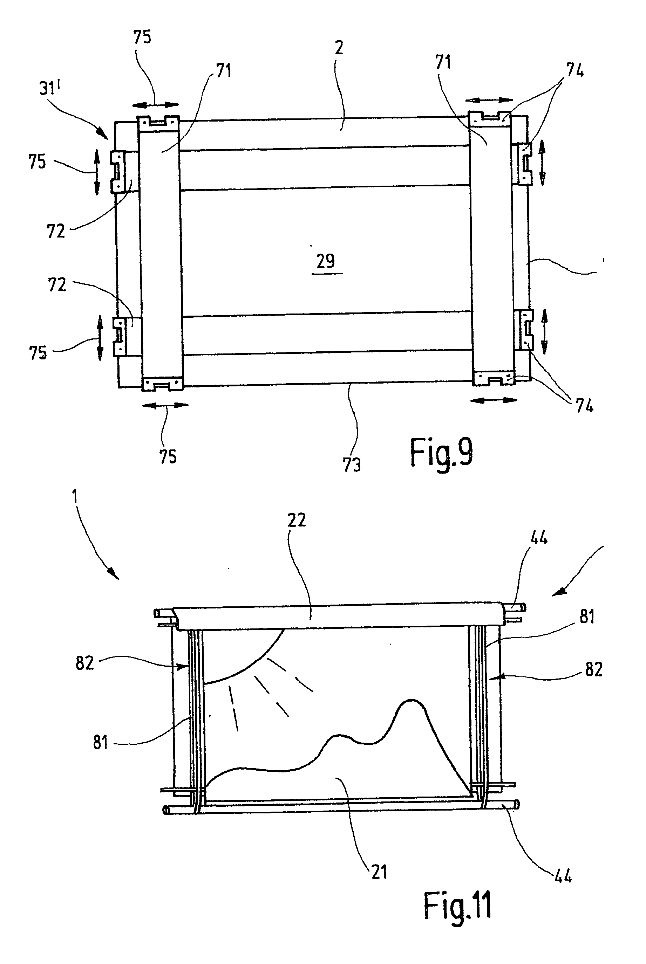

In Fig. 9 ist auf schematisierte Weise eine kontrasterhöhende Maskierungseinrichtung 31' veranschaulicht, die es ermöglicht, das Bildformat individuell anzupassen. Zu der Maskierungseinrichtung 31' gehören zwei im Einsatz vertikale Maskierungsstreifen 71 sowie zwei horizontale Maskierungstreifen 72, die alle bspw. aus schwarzem Samt oder anderem Material, jedenfalls dunkel ausgebildet sind. Die Maskierungsstreifen 71, 72 verlaufen in dem Innenraum 12 in der Nähe der Projektionsöffnung 13 parallel zu dem Dekorrahmen 3. Sie ragen durch hier nicht dargestellte längliche Schlitze in dem Gehäuse 2 hindurch, die eine Verschiebung der Maskierungsstreifen 71, 72 in gewissen Grenzen erlauben. An der Außenseite der Gehäusewände 7 bis 10 sind hier lediglich angedeutete Schienen oder Nuten 73 vorgesehen, in die an den Enden der Maskierungsstreifen 71 und 72 befestigte Klammern 74 eingreifen. Die Maskierungsstreifen 71, 72 können abschnittsweise elastisch sein, um in jeder vorgegebener Lage sicher und stabil an dem Gehäuse 2 gehalten zu werden. Sie werden längst der Führungsschienen oder -nuten 73, wie durch die Pfeile 75 veranschaulicht, aufeinander zu bzw. voneinander weg verschoben, um die Umgrenzung des sichtbaren Bereichs der Projektionsfläche 29 vorzugeben. Somit kann die Maskierung schnell an ein gewünschtes Bildformat, wie bspw. das 16:9 Breitbandbildformat oder das gewohnte 1:1 Fernsehbildformat, oder auch an den gegebenen Abstand des Projektors von der Projektionswand 1 angepasst werden. Es ist auch denkbar, die Maskierungsstreifen an verfahrbaren Schlitten zu lagern und bspw. mittels Linearmotoren, Ketten-, Riemenantriebe oder dergleichen zu verfahren. Vorzugsweise ist dies auch durch eine Fernbedienung steuerbar.

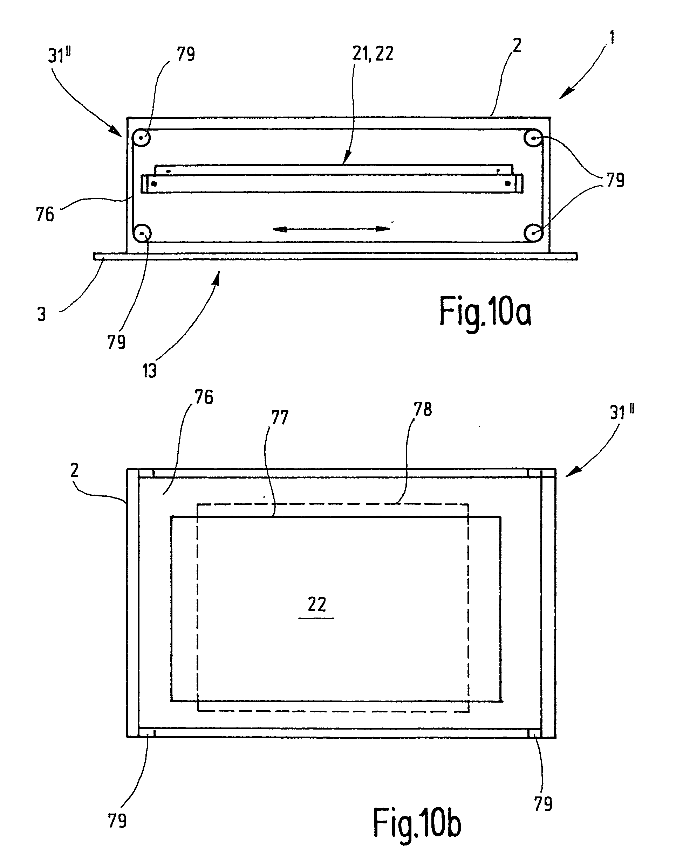

In den Fign. 10a und 10b ist eine modifizierte Ausführungsform einer anpassbaren Maskierungseinrichtung 31" veranschaulicht, die ein schnelles Wechseln zwischen zwei vorgegebenen Bildformaten ermöglicht. Hierzu wird eine zu einem Schlauch gebildete Bahn 76 eines geeigneten Maskierungsmaterials verwendet, in der in Umfangsrichtung um 180° beabstandet zwei Fenster 77, 78 ausgeschnitten sind, deren Rechteckfläche jeweils einem Bildformat entspricht. Der Maskierungsschlauch 76 ist von vier Umlenkwalzen oder -wellen 79 aufgenommen und geführt, die sich an den vier Ecken des Gehäuses 2 in vertikaler Richtung erstrecken. Der Maskierungsschlauch 76 kann somit parallel zu der Vorderseite 4, Rückseite 6 sowie zu den Seitenwänden 9 und 10 verschoben werden, um zur Maskierung der Projektionsfläche 29 entweder das Fenster 77 oder das Fenster 78 hinter der Projektionsöffnung 13 zu positionieren. Die Leinwand 22, das Bildelement 21 und die Transporteinrichtung 41 zur Bewegung der Leinwand 22 und/oder das Bildelementes 21 sind in dem von dem Maskierungsschlauch 76 umgrenzten Bereich des Innenraums 12 angeordnet und an der unteren oder oberen Gehäusewand 7, 8 gelagert. Die Transporteinrichtung 41 ist von Hand oder durch einen Motor anzutreiben.

In Fig. 11 ist stark vereinfacht eine weitere Ausführungsform einer wandelbaren Projektionswand 1 gemäß der Erfindung veranschaulicht, bei der entweder das Leinwandelement 22 oder das Bildelement 21 starr angeordnet ist, während das andere Element bewegbar ist. Für die nachfolgende Erläuterung sei eine bewegbare Leinwand 22 angenommen. Die rechteckige Leinwand 22 weist der Höhe der Projektionswand 1 entsprechende Höhenabmessungen auf und ist an ihrer Rückseite mit Riemen 81 versehen, die an den Seitenrändern der Leinwand 22 befestigt sind. Die Riemen 81 bilden Schleifen 82, die um zwei waagerechte Transportwalzen 44 der Wendeeinrichtung 46 herum gespannt sind und bspw. nach Art der Zahnriemen gemäß Fig. 7a und 7b ausgebildet sein können. Es können auch glatte Riemen 81 verwendet werden, die ferner nicht notwendigerweise umlaufend ausgebildet sein müssen. Es reicht aus, wenn sie die Längskanten der Leinwand 22 miteinander verbinden. Jedenfalls sind zwei Schleifen 82 gebildet, die um die Transportwellen 44 herum gelegt sind und es ermöglichen, durch Drehung der Transportwalzen 44 die Leinwand 22 aus einer ersten Ebene, die in Bezug auf die Projektionsöffnung 13 hinter dem Bildelement 21 angeordnet ist, in eine zweite Ebene zu überführen, in der die Leinwand 22 hinter der Projektionsöffnung 13 und vor dem Bildelement 21 angeordnet ist und dieses abdeckt.

Eine für die Aufprojektion eingerichtete Projektionswand 1 weist ein Gehäuse 2 mit einem Innenraum 12 und einer zu dem Innenraum führenden Projektionsöffnung 13, eine Leinwand 22, die aus einem undurchsichtigen Material gefertigt ist und eine licht reflektierende Projektionsfläche 29 aufweist, sowie ein flächenartiges Bildelement 21 auf, das eine mit einem Bildmotiv 27 versehene oder anderweitig geeignet gestaltete Bildfläche 26 enthält. Die Leinwand 22 und/oder das Bildelement 21 sind/ist in dem Innenraum 12 bewegbar angeordnet. Eine antreibbare Transporteinrichtung 41 dient dazu, die Leinwand 22 und/oder das Bildelement 21 wahlweise in eine erste relative Stellung, in der lediglich die Projektionsfläche 29 durch die Projektionsöffnung 13 hindurch sichtbar ist, oder in eine zweite relative Stellung zu überführen, in der lediglich die Bildfläche 26 durch die Projektionsöffnung 13 hindurch sichtbar ist.

Die Projektionswand 1 läßt sich schnell und einfach entweder in ein Bild, das sich harmonisch in einen Raum einfügt, oder in eine Projektionsleinwand verwandeln, die für die Aufprojektion von Dias, Daten, Videos oder dgl. mittels eines Beamers oder beliebigen Projektors geeignet ist. Der modulare Aufbau der Projektionseinwand 1 und lösbare Befestigungsmittel ermöglichen einen schnellen und einfachen Austausch der Komponenten der Projektionswand 1.

## Patentansprüche

1. Projektionswand, insbesondere für Dia-, Daten- oder Video-Aufprojektion,
mit einem Gehäuse (2), das einen Innenraum (12) definiert und eine zu dem Innenraum (12) führende Projektionsöffnung (13) aufweist,
mit einer für die Aufprojektion geeigneten Leinwand (22), die aus einem undurchsichtigen Material gefertigt ist und eine Licht reflektierende Projektionsfläche (29) aufweist,
mit einem flächenartigen Bildelement (21), das eine individuell gestaltete Bildfläche (26) aufweist,
wobei die Leinwand (22) und/oder das Bildelement (21) in dem Innenraum (12) bewegbar angeordnet ist bzw. sind,
mit einer antreibbaren Transporteinrichtung (41), die dazu eingerichtet ist, die Leinwand (22) und/oder das Bildelement (21) wahlweise in eine erste relative Stellung, in der lediglich die Projektionsfläche (29) durch die Projektionsöffnung (13) hindurch sichtbar ist, oder in eine zweite relative Stellung zu überführen, in der lediglich die Bildfläche (26) durch die Projektionsöffnung (13) hindurch sichtbar ist, und
mit einer Vorspanneinrichtung (51), die dazu vorgesehen ist, das bewegte Bildelement (21) und/oder die bewegte Leinwand (22) in einer gestrafften, planen Anordnung zu halten, und
mit Einstellmitteln (56) zur Einstellung der Stärke der durch die Vorspanneinrichtung ausgeübten Vorspannkraft.

2. Projektionswand nach Anspruch 1, **dadurch gekennzeichnet, dass** das Gehäuse (2) dazu eingerichtet ist, an einer Wand befestigt zu werden.

3. Projektionswand nach Anspruch 1 oder 2, **dadurch gekennzeichnet, dass** das Gehäuse mehrteilig ausgebildet und wenigstens ein Gehäuseteil (2), das den Innenraum (12) umgrenzt, sowie einen daran befestigbaren Dekorrahmen (3) enthält, der die Projektionsöffnung (13) definiert.

4. Projektionswand nach Anspruch 3, **dadurch gekennzeichnet, dass** der Dekorrahmen (3) lösbar an dem Gehäuse (2) gehaltert ist.

5. Projektionswand nach einem der Ansprüche 1 bis 4, **dadurch gekennzeichnet, dass** die Leinwand (22), das Bildelement (21) und/oder die Transporteinrichtung (41) lösbar an dem Gehäuse (2) befestigt sind.

6. Projektionswand nach Anspruch 1, **dadurch gekennzeichnet, dass** die Leinwand (22) ein vorzugsweise aus einem Gewebe hergestelltes Tuch enthält.

7. Projektionswand nach Anspruch 1, **dadurch gekennzeichnet, dass** das Bildelement (21) durch eine Textilien- oder Kunststoffbahn gebildet ist, die vorzugsweise ein Bildmotiv (27) enthält.

8. Projektionswand nach Anspruch 1, **dadurch gekennzeichnet, dass** die Transporteinrichtung (41) eine drehbar gelagerte Wickelwelle (24) enthält, auf die die Leinwand (22) oder das Bildelement (21) aufwickelbar ist.

9. Projektionswand nach Anspruch 1, **dadurch gekennzeichnet, dass** die Transporteinrichtung (41) wenigstens zwei Transportwalzen (44) enthält, die dazu dienen, die Leinwand (22) und/oder das Bildelement (21) in unterschiedliche Stellungen zu überführen.

10. Projektionswand nach Anspruch 1, **dadurch gekennzeichnet, dass** die Leinwand (22) starr angebracht ist, während das Bildelement (21) bewegbar gelagert ist.

11. Projektionswand nach Anspruch 10, **dadurch gekennzeichnet, dass** das Bildelement (21) auf eine drehbar gelagerte Wickelwelle (24) aufgerollt ist und aus einem auf der Wickelwelle aufgerollten Zustand in einen ausgezogenen Zustand überführbar ist, in dem das Bildelement (21) zwischen der Projektionsöffnung (13) und der Projektionsfläche (29) angeordnet ist.

12. Projektionswand nach Anspruch 10, **dadurch gekennzeichnet, dass** das Bildelement (21) wenigstens eine geschlossene Schleife (82) bildet und auf drehbar gelagerten Transportwalzen (44) derart aufgenommen ist, um in eine erste Stellung, in der die Bildfläche (26) zwischen der Projektionsöffnung (13) und der Projektionsfläche (29) liegt, sowie in eine zweite Stellung überführbar zu sein, in der die Bildfläche (26) in Bezug auf die Projektionsöffnung (13) hinter der Projektionsfläche (29) liegt.

13. Projektionswand nach Anspruch 1, **dadurch gekennzeichnet, dass** das Bildelement (21) unbeweglich und die Leinwand (22) bewegbar angeordnet ist.

14. Projektionswand nach Anspruch 13, **dadurch gekennzeichnet, dass** die Leinwand (22) auf eine drehbar gelagerte Wickelwelle (24) aufgerollt ist und aus einem auf der Wickelwelle (24) aufgerollten Zustand in einen entrollten Zustand überführbar ist, in dem die Leinwand (22) zwischen der Projektionsöffnung (13) und der Bildfläche (26) angeordnet ist.

15. Projektionswand nach Anspruch 13, **dadurch gekennzeichnet, dass** das Bildelement (21) wenigstens eine Schleife (82) bildet, auf drehbar gelagerten Transportwalzen (44) angebracht und in eine erste Stellung, in der die Projektionsfläche (29) zwischen der Projektionsöffnung (12) und der Bildfläche (26) angeordnet ist, sowie in eine zweite Stellung überführbar ist, in der die Projektionsfläche (29) in Bezug auf die Projektionsöffnung (13) hinter der Bildfläche (26) liegt.

16. Projektionswand nach Anspruch 1, **dadurch gekennzeichnet, dass** sowohl die Leinwand (22) als auch das Bildelement (21) bewegbar gelagert sind.

17. Projektionswand nach Anspruch 16, **dadurch gekennzeichnet, dass** die Leinwand (22) und das Bildelement (21) zu einem Schlauch (43) miteinander verbunden sind und der Schlauch (43) über im Abstand zueinander angeordnete Transportwalzen (44) derart aufgezogen ist, dass er um die Transportwalzen (44) herum gedreht werden kann.

18. Projektionswand nach einem der vorhergehenden Ansprüche, **dadurch gekennzeichnet, dass** Maskierungsmittel (31, 31', 31") vorgesehen sind, die zur Erhöhung der Kontrastwahrnehmung eine dunkle, matte Farbe aufweisen und die wirksame Projektionsfläche (29) umgrenzen.

19. Projektionswand nach Anspruch 18, **dadurch gekennzeichnet, dass** die Maskierungsmittel (31', 31") bewegbar angeordnet sind.

20. Projektionswand nach Anspruch 1, **dadurch gekennzeichnet, dass** die Vorspanneinrichtung (51) in Form wenigstens einer drehbar gelagerten Walze (44c) gebildet ist, über der die Leinwand (22) und/oder das Bildelement (21) geführt ist.

21. Projektionswand nach einem der vorhergehenden Ansprüche, **dadurch gekennzeichnet, dass** eine mit der Transporteinrichtung (41) verbundene manuelle Handhabe (39) vorgesehen ist, um diese anzutreiben.

22. Projektionswand nach einem der Ansprüche 1 bis 20, **dadurch gekennzeichnet, dass** die Transporteinrichtung (41) durch vorzugsweise elektrische Antriebsmittel (36) angetrieben ist.

23. Projektionswand nach Anspruch 22, **dadurch gekennzeichnet, dass** eine Steuereinrichtung (37) vorgesehen ist, um die Antriebsmittel (36) zu steuern.

24. Projektionswand nach Anspruch 23, **dadurch gekennzeichnet, dass** sie eine Empfangseinheit enthält, die dazu eingerichtet ist, Signale zum Betrieb des Projektionswand (1) entgegenzunehmen und an die Steuereinrichtung (37) zu übermitteln.

## Claims

1. Projection screen unit, in particular for slide, data or video projection,
with a housing (2), which defines an interior (12) and has a projection opening (13) leading to the interior (12),
with a screen (22) suitable for front projection, which is made from a non-transparent material and has a light-reflecting projection surface (29),
with a laminar image element (21), which has an individually structured image surface (26),
wherein the screen (22) and/or the image element (21) is or are movably arranged in the interior (12),
with a drivable transport means (41), which is arranged to move the screen (22) and/or the image element (21) selectively into a first relative position, in which only the projection surface (29) is visible through the projection opening (13), or into a second relative position, in which only the image surface (26) is visible through the projection opening (13), and
with a biasing means (51), which is provided to hold the moved image element (21) and/or the moved screen (22) in a taut plane arrangement, and
with adjusting elements (56) for adjusting the strength of the biasing force exerted by the biasing means.

2. Projection screen unit according to claim 1, **characterised in that** the housing (2) is arranged to be fastened to a wall.

3. Projection screen unit according to claim 1 or 2, **characterised in that** the housing is configured in multiple parts and contains at least one housing part (2), which surrounds the interior (12), and also a decorative frame (3), which can be fastened thereto and defines the projection opening (13).

4. Projection screen unit according to claim 3, **characterised in that** the decorative frame (3) is detachably held on the housing (2).

5. Projection screen unit according to one of claims 1 to 4, **characterised in that** the screen (22), the image element (21) and/or the transport means (41) are detachably fastened to the housing (2).

6. Projection screen unit according to claim 1, **characterised in that** the screen (22) contains a cloth preferably produced from a woven fabric.

7. Projection screen unit according to claim 1, **characterised in that** the image element (21) is formed by textile or plastic sheeting, which preferably contains an image motif (27).

8. Projection screen unit according to claim 1, **characterised in that** the transport means (41) contains a rotatably disposed winding shaft (24), onto which the screen (22) or the image element (21) can be wound.

9. Projection screen unit according to claim 1, **characterised in that** the transport means (41) contains at least two transport rollers (44), which serve to move the screen (22) and/or the image element (21) into different positions.

10. Projection screen unit according to claim 1, **characterised in that** the screen (22) is rigidly attached, while the image element (21) is movably disposed.

11. Projection screen unit according to claim 10, **characterised in that** the image element (21) is rolled onto a rotatably disposed winding shaft (24) and can be moved from a rolled-up state on the winding shaft into an extended state, in which the image element (21) is arranged between the projection opening (13) and the projection surface (29).

12. Projection screen unit according to claim 10, **characterised in that** the image element (21) forms at least one closed loop (82) and is accommodated on rotatably disposed transport rollers (44) so that it can be moved into a first position, in which the image surface (26) lies between the projection opening (13) and the projection surface (29), and also into a second position, in which the image surface (26) lies behind the projection surface (29) in relation to the projection opening (13).

13. Projection screen unit according to claim 1, **characterised in that** the image element (21) is arranged to be immovable and the screen (22) is arranged to be movable.

14. Projection screen unit according to claim 13, **characterised in that** the screen (22) is rolled up onto a rotatably disposed winding shaft (24) and can be moved from a rolled-up state on the winding shaft (24) into an unrolled state, in which the screen (22) is arranged between the projection opening (13) and the image surface (26).

15. Projection screen unit according to claim 13, **characterised in that** the image element (21) forms at least one loop (82), is attached to rotatably disposed transport rollers (44) and can be moved into a first position, in which the projection surface (29) is arranged between the projection opening (12) and the image surface (26), and also into a second position, in which the projection surface (29) lies behind the image surface (26) in relation to the projection opening (13).

16. Projection screen unit according to claim 1, **characterised in that** the screen (22) and also the image element (21) are movably disposed.

17. Projection screen unit according to claim 16, **characterised in that** the screen (22) and the image element (21) are connected to one another to form a tube (43) and the tube (43) is pulled over transport rollers (44) spaced from one another so that it can be rotated around the transport rollers (44).

18. Projection screen unit according to one of the preceding claims, **characterised in that** masking elements (31, 31', 31") are provided, which have a dark matt colour to increase the contrast perception and surround the active projection surface (29).

19. Projection screen unit according to claim 18, **characterised in that** the masking elements (31', 31 ") are movably arranged.

20. Projection screen unit according to claim 1, **characterised in that** the biasing means (51) is in the form of at least one rotatably disposed roller (44c), by means of which the screen (22) and/or the image element (21) is guided.

21. Projection screen unit according to one of the preceding claims, **characterised in that** a manual handle (39) connected to the transport means (41) is provided to drive this.

22. Projection screen unit according to one of claims 1 to 20, **characterised in that** the transport means (41) is driven by preferably electric drive elements (36).

23. Projection screen unit according to claim 22, **characterised in that** a control means (37) is provided to control the drive elements (36).

24. Projection screen unit according to claim 23, **characterised in that** it contains a receiver unit, which is arranged to receive signals for operation of the projection screen unit (1) and transfer them to the control means (37).

## Revendications

1. Unité de projection, en particulier pour la projection frontale de diapositives, de données ou de vidéos,
comprenant un boîtier (2) qui définit un espace intérieur (12) et comporte une ouverture de projection (13) menant à cet espace intérieur (12),
comprenant un écran (22) qui est adapté à la projection frontale, est fabriqué à partir d'un matériau non transparent et présente une surface de projection (29) réfléchissant la lumière,
comprenant un élément d'image (21) plan qui présente une surface d'image (26) agencée de manière individuelle,
l'écran (22) et/ou l'élément d'image (21) étant disposé(s) avec possibilité de déplacement dans l'espace intérieur (12),
comprenant un dispositif transporteur (41) susceptible d'être entraîné, qui est agencé pour amener l'écran (22) et/ou l'élément d'image (21) au choix dans une première position relative, dans laquelle seule la surface de projection (29) est visible par l'ouverture de projection (13), ou dans une deuxième position relative, dans laquelle seule la surface d'image (26) est visible par l'ouverture de projection (13), et
comprenant un dispositif de prétension (51) qui est prévu pour maintenir dans une disposition plane tendue l'élément d'image (21) déplacé et/ou l'écran (22) déplacé, et
comprenant des moyens de réglage (56) destinés à régler l'intensité de la force de prétension exercée par le dispositif de prétension.

2. Unité de projection selon la revendication 1, **caractérisée par le fait que** le boîtier (2) est agencé pour être fixé sur un mur.

3. Unité de projection selon la revendication 1 ou 2, **caractérisée par le fait que** le boîtier est réalisé en plusieurs parties et définit au moins une partie de boîtier (2) qui délimite l'espace intérieur (12), ainsi qu'un cadre décoratif (3), pouvant être fixé à ladite partie et définissant l'ouverture de projection (13).

4. Unité de projection selon la revendication 3, **caractérisée par le fait que** le cadre décoratif (3) est monté de façon amovible sur le boîtier (2).

5. Unité de projection selon une des revendications 1 à 4, **caractérisée par le fait que** l'écran (22), l'élément d'image (21) et/ou le dispositif transporteur (41) sont fixés de manière amovible au boîtier (2).

6. Unité de projection selon la revendication 1, **caractérisée par le fait que** l'écran (22) comporte une toile faite de préférence d'un tissu.

7. Unité de projection selon la revendication 1, **caractérisée par le fait que** l'élément d'image (21) est formé d'une bande textile ou en matière synthétique, qui comporte de préférence une image (27).

8. Unité de projection selon la revendication 1, **caractérisée par le fait que** le dispositif transporteur (41) comporte un arbre d'enroulement (24) monté tournant, sur lequel l'écran (22) ou l'élément d'image (21) peut être enroulé.

9. Unité de projection selon la revendication 1, **caractérisée par le fait que** le dispositif transporteur (41) comprend au moins deux cylindres transporteurs (44) qui servent à amener l'écran (22) et/ou l'élément d'image (21) dans des positions différentes.

10. Unité de projection selon la revendication 1, **caractérisée par le fait que** l'écran (22) est installé de façon rigide, tandis que l'élément d'image (21) est installé avec possibilité de déplacement.

11. Unité de projection selon la revendication 10, **caractérisée par le fait que** l'élément d'image (21) est enroulé sur un arbre d'enroulement (24) monté tournant et peut être amené d'un état enroulé sur l'arbre à un état déployé, dans lequel l'élément d'image (21) est disposé entre l'ouverture de projection (13) et la surface de projection (29).

12. Unité de projection selon la revendication 10, **caractérisée par le fait que** l'élément d'image (21) forme au moins une boucle (82) fermée et est disposé sur des cylindres transporteurs (44) tournants, de manière à pouvoir être amené dans une première position, dans laquelle la surface d'image (26) est placée entre l'ouverture de projection (13) et la surface de projection (29), et dans une deuxième position dans laquelle la surface d'image (26) se trouve derrière la surface de projection, rapporté à l'ouverture de projection (13).

13. Unité de projection selon la revendication 1, **caractérisée par le fait que** l'élément d'image (21) est fixe et l'écran (22) est installé avec possibilité de déplacement.

14. Unité de projection selon la revendication 13, **caractérisée par le fait que** l'écran (22) est enroulé sur un arbre d'enroulement (24) monté tournant et peut être amené d'un état enroulé sur l'arbre (24) à un état déroulé, dans lequel l'écran (22) est placé entre l'ouverture de projection (13) et la surface d'image (26).

15. Unité de projection selon la revendication 13, **caractérisée par le fait que** l'élément d'image (21) forme au moins une boucle (82) fermée, est disposé sur des cylindres transporteurs (44) tournants et peut être amené dans une première position, dans laquelle la surface de projection (29) est placée entre l'ouverture de projection (13) et la surface d'image (26), et dans une deuxième position dans laquelle la surface de projection (29) se trouve derrière la surface d'image (26), rapporté à l'ouverture de projection (13).

16. Unité de projection selon la revendication 1, **caractérisée par le fait que** aussi bien l'écran (22) que l'élément d'image (21) sont installés avec possibilité de déplacement.

17. Unité de projection selon la revendication 16, **caractérisée par le fait que** l'écran (22) et l'élément d'image (21) sont reliés l'un à l'autre pour former un tuyau souple (43), et le tuyau souple (43) est enfilé sur des cylindres transporteurs (44) disposés à distance l'un de l'autre, de manière à pouvoir être tourné autour des cylindres transporteurs (44).

18. Unité de projection selon une des revendications précédentes, **caractérisée par le fait qu'**il est prévu des moyens de masquage (31, 31', 31") qui présentent une couleur mate foncé, pour augmenter la perception des contrastes, et délimitent la surface de projection (29) active.

19. Unité de projection selon la revendication 18, **caractérisée par le fait que** les moyens de masquage (31', 31") sont installés avec possibilité de déplacement.

20. Unité de projection selon la revendication 1, **caractérisée par le fait que** le dispositif de prétension (51) est réalisé sous la forme d'au moins un cylindre (44c) monté tournant, sur lequel est/sont guidé(s) l'écran (22) et/ou l'élément d'image (21).

21. Unité de projection selon une des revendications précédentes, **caractérisée par le fait qu'**il est prévu un moyen de manipulation (39) manuel qui est relié au dispositif transporteur (41) afin d'entraîner celui-ci.

22. Unité de projection selon une des revendications 1 à 20, **caractérisée par le fait que** le dispositif transporteur (41) est entraîné par des moyens d'entraînement (36), de préférence électriques.

23. Unité de projection selon la revendication 22, **caractérisée par le fait qu'**il est prévu un dispositif de commande (37) pour commander les moyens d'entraînement (36).

24. Unité de projection selon la revendication 23, **caractérisée par le fait qu'**elle comporte une unité de réception qui est conçue pour recevoir des signaux pour le fonctionnement de l'unité de projection (1) et les transmettre au dispositif de commande (37).
